# EUROPÄISCHE PATENTSCHRIFT

(11) **EP 2 628 959 B1**
(45) Veröffentlichungstag und Bekanntmachung des Hinweises auf die Patenterteilung: **06.03.2019**
(21) Anmeldenummer: 13000301.5
(22) Anmeldetag: 22.01.2013
(51) Int. Cl.: F15B 13/04, F15B 13/043

(54) **Servoventil**
Servo valve
Servosoupape

(30) Priorität: 14.02.2012 DE 102012002921
(43) Veröffentlichungstag der Anmeldung: 21.08.2013
(73) Patentinhaber: Liebherr-Aerospace Lindenberg GmbH, 88161 Lindenberg/Allgäu (DE)
(72) Erfinder: Frick, Jörn, 88289 Waldburg (DE); Gaile, Anton, Dipl.-Ing., 88299 Leutkirch (DE); Weixler, Franz, Dipl.-Ing., 87435 Kempten (DE)
(74) Vertreter: Herrmann, Uwe

(56) Entgegenhaltungen:
- DE-B- 1 089 602
- JP-U- S63 187 788

## Beschreibung

Die vorliegende Erfindung betrifft ein Servoventil, insbesondere ein zweistufiges oder mehrstufiges elektrohydraulisches Servoventil nach dem Oberbegriff des Anspruchs 1.

In der Hydrosystemtechnik werden heutzutage besonders hohe Ansprüche an das Betriebsverhalten der verbauten Hydraulikkomponenten innerhalb eines Hydrosystems gestellt. Die verbaute Hydraulik soll insbesondere bestimmte Hydraulikvolumenströme bzw. -drücke hochpräzise entsprechend vorgegebener Steuersignale regulieren. Hierzu geeignete Ventile, vor allem Stetigventile, erlauben es, einen stetigen Übergang der Schaltstellungen des Ventils zuzulassen.

Bei den Stetigventilen wird dementsprechend ein elektrisches Eingangssignal zur Ansteuerung des Stetigventils in ein hydraulisches Ausgangssignal umgewandelt. Zu einer Kategorie der Stetigventile gehören die seit langem bekannten Servoventile, die eine hochpräzise und vor allem stetige Einstellung der Ventilschaltstellung erlauben, was insbesondere in der modernen Flugzeugtechnik als Grundvoraussetzung gilt.

Aus dem Stand der Technik sind sogenannte zweistufige Elektro-Hydraulische-Servoventile (EHSV) bekannt, die aus einer ersten Stufe, der sogenannten Vorsteuerstufe, und einer zweiten Stufe, der sogenannten Leistungsstufe, bestehen. Die Leistungsstufe weist dabei einen Steuerschieber auf, der je nach den auf diesen wirkenden Drücken in seiner Position verharrt oder bewegt wird. Die elektrisch ansteuerbare Vorsteuerstufe kann einen Anker aufweisen, der sich in Abhängigkeit von einem Magnetfeld verdreht und dabei z.B. über ein jet-pipe Prinzip die Druckverhältnisse am Steuerschieber ändert. Dadurch wird die Auslenkung des Steuerschiebers bewirkt, d.h. die Vorsteuerstufe dient zur Ansteuerung der Leistungsstufe, d.h. zu einer gesteuerten Auslenkung des Steuerschiebers, mittels dessen ein von der Position des Steuerschiebers abhängiger Volumenstrom zu einer anzusteuernden Komponente freigegeben oder abgesperrt bzw. in seiner Größe eingestellt wird. Wahlweise können die Servoventile auch nach dem jet-pipe-, flapper-nozzle oder deflector-jet-Prinzip oder auch nach jedem anderen möglichen Funktionsprinzip ausgebildet sein bzw. arbeiten.

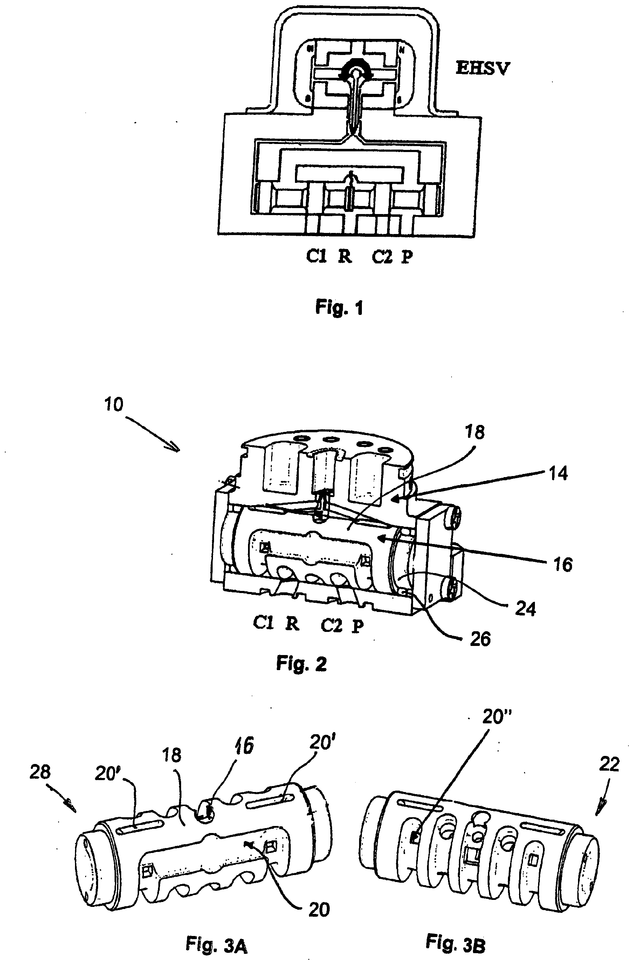

Ein solches elektrohydraulisches Servoventil ist in Figur 1 schematisch dargestellt. Mittels Volumenfluß durch Auslenken der Vorsteuerstufe wird proportional zum elektrischen Eingangssignal der Steuerschieber der Leistungsstufe hin- und herbewegt. Der Steuerschieber steuert dann exakt den Volumenstrom zu einem mit dem Servoventil verbundenen Verbraucher, wie zum Beispiel einem Aktuator.

In den bisher bekannten Servoventilen sind die Ventilblöcke der Leistungsstufe mit Verbindungs- und Querbohrungen und die Steuerschieberhülse mit Einstichen versehen, um die Hydraulikflüssigkeit zu den gewünschten Schnittstellen zu transportieren.

Dadurch, dass in den Ventilblöcken der Leistungsstufe Quer- und Verbindungsbohrungen angebracht sind, müssen die Bohrungen anschließend von außen mit Pressstopfen oder Schraubstopfen verschlossen sein, um einen geschlossenen Kreislauf zu erhalten, wobei durch die Abdichtung Hydraulikkreise entstehen. Diese Ausführung der bisher bekannten Servoventile hat sich jedoch als nachteilig erwiesen. Ein derartiges Servoventil ist aus der US 2004/0144433 A1 bekannt.

Ein weiterer Nachteil der bisher bekannten Servoventile besteht darin, dass im Ventilblock seitlich ausgelenkte Verbindungseinstiche geschaffen werden müssen, um einen Übergang von den Verbindungs- und Querbohrungen zur Steuerschieberhülse zu erhalten. Diese Verbindungseinstiche werden mit einem Scheibenfräser eingefräst, so dass Verschneidungen entstehen. Die entstandenen Verschneidungen weisen aber ein kritisches Fatique- und Dauerfestigkeitsverhalten auf und müssen abgesehen davon aufwendig entgratet werden. Weiterhin können die Ventilblöcke in den bisher bekannten Servoventilen nicht kompakt gebaut werden, da genügend Material für Verbindungs- und Querbohrungen und auch für die Pressstopfen vorhanden sein muss.

Ein weiterer Nachteil der bekannten Servoventile besteht darin, dass je nach Systemdruck und Gewichtslimit die Ventilblöcke aus Aluminium, Titan oder Stahl gefertigt werden, was angesichts der Variantenvielzahl sehr kostenaufwendig ist. Zusätzliche Aufwendungen werden auch durch Bohrungen für die Presstopfen verursacht, wobei die Mehrzahl an externen Abdichtungen zusätzlich das Risiko erhöht. Die höhere Anzahl der einzelnen Teile des Servoventils führt einerseits zu einer geringeren Zuverlässigkeit und andererseits zur Erhöhung der Herstellungskosten. Ein gattungsgemäßes Servoventil ist aus DE 10 89 602 B bekannt.

Aufgabe der vorliegenden Erfindung ist es daher, ein elektrohydraulisches Servoventil der eingangsgenannten Art bereitzustellen, welches einen vereinfachten und gleichzeitig betriebssicheren Aufbau aufweist und durch welches der Herstellungs- sowie der Kostenaufwand wesentlich reduziert werden kann. Diese Aufgabe wird erfindungsgemäß durch ein elektrohydraulisches Servoventil mit den Merkmalen des Anspruchs 1 gelöst.

Das erfindungsgemäße elektrohydraulische Servoventil weist eine erste Stufe, die als Vorsteuerstufe arbeitet, und eine zweite Stufe, die als Leistungsstufe arbeitet, auf, wobei die zweite Stufe eine Steuerschieberhülse mit einer Mantelfläche aufweist, wobei die Mantelfläche der Steuerschieberhülse mit mindestens einem Strömungskanal zur Übertragung von Steuerstrom versehen ist. Des Weiteren ist ein Steuerschieber in der Steuerschieberhülse beweglich angebracht. Unter Steuerstrom wird ein Strom eines Fluids verstanden, der zum Bewegung des Steuerschiebers dient, unter Volumenstrom wird der Strom eines Fluids verstanden, der zum Bewegung der mittels des Servoventils anzusteuernder Komponente dient. Dies bedeutet, dass die Steuerschieberhülse wenigstens einen von und/oder zu dem Steuerschieber führenden Kanal und/oder wenigstens einen von und/oder zu dem Verbraucher führenden Kanal aufweist.

Erfindungsgemäß ist vorgesehen, dass wenigstens einer der genannten Strömungskanäle nutförmig ausgebildet ist und sich in der Oberfläche der Steuerschieberhülse erstreckt. Dieser wenigstens eine nutförmige Strömungskanal verläuft zumindest abschnittsweise, d.h. über einen Teilbereich oder auch über seine gesamte Länge nicht in Umfangsrichtung der Steuerschieberhülse. Unter "Umfangsrichtung" ist die Richtung zu verstehen, die sich entlang des Umfangs der Steuerschieberhülse und senkrecht zu deren Längsachse erstreckt. Wenigstens einer der nutförmigen Strömungskanäle in der Mantelfläche der Steuerschieberhülse verläuft abschnittsweise oder insgesamt in einer anderen Richtung, z.B. in Richtung der Längsachse der Steuerschieberhülse, in einem Winkel von < 90° oder > 90° relativ zu dieser Längsache, d.h. schräg etc. Damit unterscheidet sich die vorliegende Erfindung von Steuerschieberhülsen, bei denen der oder die Strömungskanäle ringförmig angeordnet sind und in Umfangsrichtung der Steuerschieberhülse verlaufen.

Die Vorsteuerstufe kann wie oben beschrieben einen Elektromagneten aufweisen, der in Abhängigkeit des elektrischen Stroms einen Anker bewegt, der vorzugsweise elastisch gelagert ist und gedreht wird. Dadurch wird ein hydraulischer Strahl ausgelenkt, von dessen Position die Druckverhältnisse am Steuerschieber abhängen. Der Steuerschieber kann somit in Abhängigkeit des elektrischen Signals bewegt werden und je nach seiner Position einen Volumenstrom zu und/oder von einem Verbraucher steuern. Dies ist jedoch nur eine denkbare Ausgestaltung. Von der Erfindung sind auch beliebige andere Ausbildungen der Vorsteuerstufe, wie z.B. das jet-pipe-, flapper-nozzle oder das deflector-jet-Prinzip und andere denkbare Varianten umfaßt.

Durch das erfindungsgemäße Ausbilden der Steuerschieberhülse mit mindestens einem Strömungskanal und vorzugsweise mit mehreren Strömungskanäle erübrigen sich die aus dem Stand der Technik bekannten Scheibenfräsereinstiche sowie die Verteilungsbohrungen im Ventilblock. Auf diese kann vorzugsweise verzichtet werden. Der Volumen- und Steuerstrom wird ausschließlich oder auch über die auf der Steuerschieberhülse angebrachten Kanäle übertragen, die vorzugsweise nutförmig ausgeformt sind. Der Steuerschieber ist dabei geeignet, exakt den Volumenstrom zu einem Verbraucher, insbesondere einem Aktuator, zu steuern. Dabei weist der Ventilblock ein gutes Fatique- und Dauerfestigkeitsverhalten auf. Auch eine Abdichtung mit Pressstopfen kann bei der erfindungsgemäßen Lösung entfallen.

Vorzugsweise weist der Ventilblock keine Steuerkanäle auf, die zum Ansteuern des Steuerschiebers dienen oder weniger derartiger Steuerkanäle als bekannte Anordnungen.

Auf diese Weise kann der Ventilblock des erfindungsgemäßen elektrohydraulischen Servoventils sehr kompakt ausgeführt werden. Daher kann das erfindungsgemäße elektrohydraulische Servoventil einen großen Gewichtsvorteil gegenüber den aus dem Stand der Technik bekannten Servoventilen entfalten. Somit kann ein Einheitsventilblock bzw. ein Ventilblock aus Stahl und nicht notwendigerweise aus Aluminium oder Titan hergestellt werden, was der Kostenaufwand für die Herstellung solcher Servoventile wesentlich reduziert.

Erfindungsgemäß ist der mindestens eine Strömungskanal, mit welchem die Mantelfläche der Steuerschieberhülse versehen ist, nutförmig ausgebildet, jedoch ist eine andere Ausbildung ebenfalls möglich und denkbar. Die Nut kann dabei U-förmig, V-förmig oder aber auch rechteckig sein oder auch eine andere Form aufweisen. Die Nut ist vorzugsweise "oben", d.h. zur Mantelfläche der Steuerschieberhülse hin offen ausgebildet.

Eine besonders bevorzugte Ausführungsform des erfindungsgemäßen Servoventils sieht vor, dass auf der Mantelfläche der Steuerschieberhülse mehrere Strömungskanäle ausgeformt sind, wobei diese unterschiedlich dimensioniert sein können und auf der Mantelfläche vorzugsweise symmetrisch zueinander angeordnet sind. Dabei können die Strömungskanäle mittig und/oder an den beiden Enden der Steuerschieberhülse ausgeformt sein und gleiche oder unterschiedliche Abmessungen aufweisen.

Erfindungsgemäß weist die Steuerschieberhülse sowohl Strömungskanäle auf, die zur Ansteuerung des Steuerschiebers dienen, als auch Strömungskanäle, die zur Steuerung einer mit dem Servoventil zu steuernden Komponente dienen, wie beispielsweise einem Aktuator.

Dabei wird die Anzahl der Bauteile des erfindungsgemäßen Servoventils wesentlich reduziert und dadurch die Fehlerrate bei der Herstellung minimiert.

Vorzugsweise ist die zweite Stufe des elektrohydraulischen Servoventils als ein eigenständiges Gehäuse, welches mit dem Gehäuse der Vorsteuerstufe verbunden ist, ausgebildet. Dieses erstgenannte Gehäuse wird auch als Ventilblock bezeichnet. Der Ventilblock weist Hydraulikbohrungen auf. Die auf der Steuerschieberhülse vorgesehenen Strömungskanäle übernehmen zumindest teilweise die Funktion der Hydraulikbohrungen bzw. stehen mit diesen in Verbindung. Eine bevorzugte Ausführungsform des erfindungsgemäßen elektrohydraulischen Servoventils sieht vor, dass die Steuerschieberhülse im Ventilblock derart angeordnet ist, dass sie vom Ventilblock teilweise oder vollständig umgeben ist. Die Verbindung der Steuerschieberhülse im Ventilblock erfolgt dabei vorzugsweise über Presssitz. Die Steuerschieberhülse ist dabei im Ventilblock axial verpresst. Durch die axiale Pressung kann auch eine radiale Pressung der Steuerschieberhülse im Ventilblock erfolgen. Dadurch wird der Dichtspalt auf ein den Betriebsbedingungen angepasstes Minimum eingestellt.

Die Steuerschieberhülse dient vorzugsweise gleichzeitig auch als Abdichtung zwischen den einzelnen Kreisläufen. Dabei weist der Ventilblock und die Steuerschieberhülse vorteilhafterweise den gleichen Ausdehnungskoeffizienten, d.h. die gleiche Werkstoffpaarung, auf. Durch den vorzugsweise vorgesehenen Wegfall von, bei den bisher bekannten elektrohydraulischen Servoventilen, mehreren O-Ring Dichtungen sowie durch das Einpressen der Steuerschieberhülse in den Ventilblock wird die Montagezeit erheblich verkürzt.

Durch die erfindungsgemäße Ausbildung des elektrohydraulischen Servoventils, bei welchem die Steuerschieberhülse mit Strömungskanälen zur Übertragung von Steuerstrom (Fluidstrom zur Ansteuerung des Steuerschiebers) und Volumenstrom (Fluidstrom zur Ansteuerung eines Verbrauchers) versehen ist, entstehen zwischen der Steuerschieberhülse und dem Ventilblock Hydraulikkreise, deren Abdichtung über Presspassungen erfolgt. Vorzugsweise ist die Steuerschieberhülse an ihren beiden Enden derart ausgebildet, dass sie Nuten oder sonstige Aufnahmen aufweist, an denen jeweils eine Dichtung, vorzugsweise eine O-Ring Dichtung, angebracht ist, so dass keine Leckage entstehen kann.

Vorzugsweise ist die Leistungsstufe des Servoventils blockartig aufgebaut, mit an der Unterseite des Blocks ausgeformten Anschlussschnittstellen, wobei die Strömungskanäle der Steuerschieberhülse mit den jeweiligen Anschlussschnittstellen hydraulisch verbunden sind. Somit wird über die Strömungskanäle die Hydraulikflüssigkeit zu bzw. von den Schnittstellen der Leistungsstufe P, R, C1, C2 übertragen. Weitere Strömungskanäle dienen zur Übertragung der Steuerdrucke der ersten Stufe, welche den Steuerschieber hin- und herbewegen.

Der die Steuerschieberhülse umgebende Ventilblock kann aus Stahl, Titan, oder Aluminium bestehen. Auch die Steuerschieberhülse kann aus Stahl, Titan, oder Aluminium bestehen. Eine Titan- oder Stahlausführung wird dabei wegen der hohen Festigkeit bei gleichzeitig hoher Korrosionsbeständigkeit für solche Anwendungen besonders bevorzugt. Andererseits weisen die aus Stahl hergestellten Ventilblöcke und Steuerschieberhülsen eine längere Lebensdauer im Vergleich zu solchen, die aus Titan bestehen, auf. Für die Verwendung von Stahl und Aluminium spricht aber auch der wesentlich niedrigere Preis.

Wegen der hohen Präzision und Korrosionsbeständigkeit sowie der relativ kleinen Abmessungen und nicht zuletzt der kostengünstigen Herstellung ist das erfindungsgemäße elektrohydraulische Servoventil für Luftfahrtanwendungen besonders geeignet.

Die vorliegende Erfindung betrifft des weiteren einen Aktuator, der mit den genannten Schnittstellen des Servoventils derart in Verbindung steht, dass der Aktuator durch das Servoventil ansteuerbar ist.

Der Aktuator kann ein Gehäuse und/oder einen Ventilblock aufweisen und die zweite Stufe des Servoventils kann in dem genannten Gehäuse und/oder in dem genannten Ventilblock des Aktuators aufgenommen sein.

Die vorliegende Erfindung betrifft des Weiteren ein Luftfahrzeug mit wenigstens einem erfindungsgemäßen Aktuator und/oder Servoventil, das zur Ansteuerung einer oder mehrerer Komponenten des Luftfahrzeuges, insbesondere Flugzeuges dient.

Die vorliegende Erfindung wird nun anhand eines Ausführungsbeispiels und der Zeichnung näher erläutert. Es zeigen:
- Figur 1:: eine Schnittdarstellung durch ein elektrohydraulisches Servoventil,
- Figur 2:: eine Schnittdarstellung eines erfindungsgemäßen elektrohydraulischen Servoventils im Bereich der Leistungsstufe gemäß einem Ausführungsbeispiel,
- Figuren 3A, 3B:: eine schematische perspektivische Darstellung einer Steuerschieberhülse des elektrohydraulischen Servoventils gemäß Figur 2.

Figur 2 zeigt eine Schnittdarstellung eines erfindungsgemäßen elektrohydraulischen Servoventils 10, welches nur im Bereich einer zweiten Stufe, die als Leistungsstufe arbeitet, dargestellt ist. Die Vorsteuerstufe ist hier nicht gezeigt, ist aber ähnlich, wie die in Figur 1 dargestellte, aufgebaut. Die Leistungsstufe weist ein Gehäuse auf, welches weiterhin als Ventilblock 14 bezeichnet wird.

Des Weiteren weist die Leistungsstufe eine Steuerschieberhülse 16 auf, in der ein hier nicht dargestellter Steuerschieber seitlich hin und her beweglich angeordnet ist. Der Steuerschieber wird dabei mittels Volumenfluss durch Auslenken der hier nicht dargestellten Vorsteuerstufe, welche auch als erste Stufe bezeichnet wird, proportional zum elektrischen Eingangssignal der Vorsteuerstufe bewegt.

Der Steuerschieber wird in Abhängigkeit von dem elektrischen Eingangssignal durch die Vorsteuerstufe bewegt und ermöglicht in Abhängigkeit seiner Position, den Volumenstrom zu einem Verbraucher, wie ein Aktuator, exakt zu steuern.

Die Steuerschieberhülse 16 weist weiterhin eine Mantelfläche 18 auf, auf der - wie in den weiteren Figuren 3A und 3B gezeigt - nutförmige Strömungskanäle 20, 20', 20" zur Übertragung von Steuerstrom und Volumenstrom ausgeformt sind. Über diese nutförmigen Strömungskanäle 20, 20', 20" wird die Hydraulikflüssigkeit von und/oder zu den Schnittstellen P (Pumpe), R (Rücklauf), C1 (Kammer 1 des Aktuators) und C2 (Kammer 2 des Aktuators) der Leistungsstufe übertragen. Dabei dienen weitere Strömungskanäle zur Übertragung der Steuerdrücke der ersten Stufe, d.h. von und/oder zu dem Steuerschieber, so dass der Steuerschieber beispielsweise in horizontaler Richtung oder in sonstiger Weise vorzugsweise translatorisch bewegt werden kann.

Wie aus den Figuren 3A und 3B ersichtlich, sind zwei der Strömungskanäle 20' an beiden Enden 28 der Steuerschieberhülse 16 vorgesehen, wobei diese schlitzförmig ausgebildet und spiegelsymmetrisch zueinander angeordnet sind.

In Figur 3B sind weitere Strömungskanäle 20" gezeigt, die in diesem Ausführungsbeispiel ebenfalls an beiden Enden 28 der Steuerschieberhülse 16 ausgeformt sind. Eine andere Anordnung der Strömungskanäle ist selbstverständlich ebenfalls möglich.

Ein weiterer Strömungskanal 20 ist, wie in Figur 3A gezeigt, von den Strömungskanälen 20' beabstandet und etwa in der Mitte der Steuerschieberhülse 16 ausgeformt, wobei dieser Strömungskanal als eine längliche Nut, die sich entlang der Längsachse der Steuerschieberhülse 16 erstreckt, ausgebildet ist.

Die Steuerschieberhülse 16 ist zylinderförmig ausgebildet und mit Presssitz im Ventilblock 14 eingesetzt. Dabei weist der Ventilblock 14 eine zylinderförmige Ausnehmung auf, so dass die Steuerschieberhülse 16 im Inneren des Ventilblocks 14 aufgenommen wird. Somit dient die Steuerschieberhülse 16 gleichzeitig als Abdichtung zwischen den einzelnen Kreisläufen.

Des Weiteren sind die Steuerschieberhülse 16 und der Ventilblock 14 vorzugsweise aus demselben Material hergestellt, so dass diese den gleichen Ausdehnungskoeffizienten aufweisen. Dabei kommen Stahl, Aluminium oder Titan, oder aber auch andere Metalle sowie deren Legierungen in Betracht.

Wie in Figur 2 gezeigt, weist die Steuerschieberhülse 16 an ihren beiden Enden 28 jeweils eine Nut 22 auf, auf die jeweils eine Dichtung, hier eine O-Ring Dichtung 26 angebracht ist. Grundsätzlich ist auch ein Aufbau ohne Dichtungen möglich, da die Abdichtung bereits durch den Presssitz erreicht wird bzw. werden kann. Aus Gründen der redundanten Ausführung können jedoch eine oder mehrere Dichtungen vorhanden sein.

Der Ventilblock 14 der Leistungsstufe des Servoventils 10 weist Anschlussschnittstellen C1, R, C2, P auf, die an seiner Unterseite, an der ein Verbraucher, insbesondere ein Aktuator angeschlossen werden kann, ausgeformt sind. Dabei stehen die Strömungskanäle 20, 20', 20" der Steuerschieberhülse 16 mit den Anschlussschnittstellen in Verbindung, so dass die Hydraulikflüssigkeit zu den Anschlussschnittstellen P, R, C1 und C2 der Leistungsstufe übertragen werden kann.

Der Ventilblock 14 weist nur Hydraulikkanäle auf, die zu den Kanälen 20' der Schieberhülse 16 führen sowie Kanäle zu den genannten Anschlüssen, jedoch keine Kanäle, die von und/oder zu dem Steuerschieber führen. Diese Kanäle sind in dieser Ausführungsform Bestandteil der Steuerschieberhülse 16.

## Patentansprüche

1. Servoventil, insbesondere zweistufiges oder mehrstufiges elektrohydraulisches Servoventil, mit
einer ersten Stufe, die als Vorsteuerstufe arbeitet, und
einer zweiten Stufe, die als Leistungsstufe arbeitet, wobei
die zweite Stufe einen Ventilblock (14) und eine in diesem angeordnete Steuerschieberhülse (16) mit einer Mantelfläche (18) aufweist, wobei
ein Steuerschieber in der Steuerschieberhülse (16) beweglich angeordnet ist,
und wobei die Steuerschieberhülse (16) im Ventilblock (14) angeordnet und im Ventilblock (14) verpresst ist, so dass die Steuerschieberhülse (16) vom Ventilblock (14) teilweise oder vollständig umgeben ist, und zwischen Steuerschieberhülse (16) und Ventilblock (14) Hydraulikkreise entstehen, deren Abdichtung über Presspassungen erfolgt,
**dadurch gekennzeichnet, dass**
die Mantelfläche (18) der Steuerschieberhülse (16) mit einem Strömungskanal (20, 20', 20") zur Übertragung von einem Fluidstrom zur Ansteuerung des Steuerschiebers versehen ist, wobei der Strömungskanal (20, 20', 20") durch eine in der Oberfläche der Steuerschieberhülse (16) angeordnete Nut gebildet ist, die abschnittsweise oder insgesamt nicht in Umfangsrichtung der Steuerschieberhülse (16) verläuft.

2. Servoventil nach Anspruch 1, **dadurch gekennzeichnet, dass** auf der Mantelfläche (18) der Steuerschieberhülse (16) mehrere Strömungskanäle (20, 20', 20") ausgebildet sind, wobei diese unterschiedlich dimensioniert sind und auf der Mantelfläche (18) vorzugsweise symmetrisch zueinander angeordnet sind.

3. Servoventil nach einem der vorhergehenden Ansprüche, **dadurch gekennzeichnet, dass** zwischen Steuerschieberhülse (16) und Ventilblock (14) Hydraulikkreise entstehen, deren Abdichtung über mindestens eine Dichtung erfolgt.

4. Servoventil nach einem der vorhergehenden Ansprüche, **dadurch gekennzeichnet, dass** die Steuerschieberhülse (16) an ihren beiden Enden (28) Nuten oder Vertiefungen (22) aufweist, auf welchen jeweils eine Dichtung, vorzugsweise eine O-Ring-Dichtung (26), anbringbar oder angebracht ist.

5. Servoventil nach einem der vorhergehenden Ansprüche, **dadurch gekennzeichnet, dass** der Ventilblock (14) der Leistungsstufe des Servoventils (10) Anschlussschnittstellen (C1, R, C2, P) aufweist, die an seiner Unterseite ausgeformt sind, wobei die Strömungskanäle (20, 20', 20") der Steuerschieberhülse (16) mit den Anschlussschnittstellen (C1, R, C2, P) in Verbindung stehen.

6. Servoventil nach einem der vorhergehenden Ansprüche, **dadurch gekennzeichnet, dass** der die Steuerschieberhülse (16) umgebende Ventilblock (14) aus Stahl, Titan, oder Aluminium besteht.

7. Servoventil nach einem der vorhergehenden Ansprüche, **dadurch gekennzeichnet, dass** die Steuerschieberhülse (16) aus Stahl, Titan, oder Aluminium besteht.

8. Aktuator, insbesondere zur Ansteuerung einer oder mehrerer Klappen eines Luftfahrzeuges, **dadurch gekennzeichnet, dass** der Aktuator mit einem Servoventil nach einem der Ansprüche 1 bis 7 ausgestattet ist und mit diesem derart in Verbindung steht, dass der Aktuator hydraulisch durch das Servoventil gesteuert wird.

9. Aktuator nach Anspruch 8, **dadurch gekennzeichnet, dass** der Aktuator ein Gehäuse und/oder einen Ventilblock aufweist und dass die zweite Stufe des Servoventils in dem genannten Gehäuse und/oder in dem genannten Ventilblock des Aktuators integriert ist.

10. Luftfahrzeug mit mindestens einem Servoventil nach einem der Ansprüche 1 bis 7 und/oder mit mindestens einem Aktuator nach Anspruch 8 oder 9.

## Claims

1. Servo valve, in particular two-stage or multi-stage electrohydraulic servo valve, comprising
a first stage, which operates as a pilot stage, and
a second stage, which operates as a power stage, wherein
the second stage comprises a valve block (14) and arranged therein a control valve sleeve (16) with a shell surface (18), wherein a control valve is moveably arranged in the control valve sleeve (16), and wherein the control valve sleeve (16) is arranged in the valve block (14) and is press-fit in the valve block (14), so that the control valve sleeve (16) is partially or completely surrounded by the valve block (14), and hydraulic circuit are created between control valve sleeve (16) and valve block (14), the sealing of which is effected by means of press-fits,
**characterized in that**
the shell surface (18) of the control valve sleeve (16) is provided with a flow channel (20, 20', 20") for the transmission of a fluid stream to activate the control valve, wherein the flow channel (20, 20', 20") is formed by means of a groove arranged in the surface of the control valve sleeve (16), which groove does not extend in the circumferential direction of the control valve sleeve (16) in sections or as a whole.

2. Servo valve according to claim 1, **characterized in that** multiple flow channels (20, 20', 20") are formed on the shell surface (18) of the control valve sleeve (16), wherein said channels have different dimensions and are arranged on the shell surface (18), preferably symmetrically to one another.

3. Servo valve according to one of the preceding claims, **characterized in that** hydraulic circuits are created between control valve sleeve (16) and valve block (14), the sealing of which is effected by means of at least one seal.

4. Servo valve according to one of the preceding claims, **characterized in that** control valve sleeve (16) comprises grooves or recesses (22) at the two ends (28) of said control valve sleeve, on which a seal, preferably an O-ring seal, is or can be attached.

5. Servo valve according to one of the preceding claims, **characterized in that** the valve block (14) of the power stage of the servo valve (10) comprises connection interfaces (C1, R, C2, P), which are formed on its lower side, wherein the flow channels (20, 20', 20") of the control valve sleeve (16) are communicated with the connection interfaces (C1, R, C2, P).

6. Servo valve according to one of the preceding claims, **characterized in that** the valve block (14) surrounding the control valve sleeve (16) consists of steel, titanium, or aluminum.

7. Servo valve according to one of the preceding claims, **characterized in that** the control valve sleeve (16) consists of steel, titanium, or aluminum.

8. Actuator, in particular for the activation of one or multiple flaps of an aircraft, **characterized in that** the actuator is equipped with a servo valve according to any of claims 1 to 7 and is communicated therewith in such a way that the actuator is hydraulically controlled by means of the servo valve.

9. Actuator according to claim 8, **characterized in that** the actuator comprises a housing and/or a valve block and **in that** the second stage of the servo valve is integrated in the mentioned housing and/or in the mentioned valve block of the actuator.

10. Aircraft having at least one servo valve according to any of claims 1 to 7, and/or at least one actuator according to claim 8 or 9.

## Revendications

1. Servovalve, en particulier servovalve électrohydraulique à deux étages ou à étages multiples, avec
un premier étage, qui fonctionne comme étage pilote, et
un deuxième étage, qui fonctionne comme étage de puissance, dans laquelle le deuxième étage présente un bloc de valve (14) et une chemise tiroir de commande (16) disposée dans celui-ci avec une surface enveloppante (18), dans laquelle un tiroir de commande est disposé de manière mobile dans la chemise tiroir (16) ; et dans laquelle la chemise tiroir de commande (16) est disposée dans le bloc de valve (14) et est compressée dans le bloc de valve (14) de façon à ce que la chemise tiroir de commande (16) est entourée en partie ou en totalité par le bloc de valve (14) et que des circuits hydrauliques se forment entre la chemise tiroir de commande (16) et le bloc de valve (14), dont l'étanchéification se fait par l'intermédiaire d'ajustements avec serrage,
**caractérisée en ce que**
la surface enveloppante (18) de la chemise tiroir de commande (16) est pourvue d'un canal d'écoulement (20, 20', 20") servant au transfert d'un flux de fluide aux fins du pilotage du tiroir de commande, le canal d'écoulement (20, 20', 20") étant formé par une rainure disposée dans la surface de la chemise tiroir de commande (16), qui ne s'étend pas par sections ou en totalité dans la direction périphérique de la chemise tiroir de commande (16).

2. Servovalve selon la revendication 1, **caractérisée en ce que** plusieurs canaux d'écoulement (20, 20', 20") sont réalisés sur la surface enveloppante (18) de la chemise tiroir de commande (16), ces derniers étant dimensionnés différemment et étant disposés de préférence de manière symétrique les uns par rapport aux autres sur la surface enveloppante (18).

3. Servovalve selon l'une quelconque des revendications précédentes, **caractérisée en ce que** des circuits hydrauliques se forment entre la chemise tiroir de commande (16) et le bloc de soupape (14), dont l'étanchéification se fait par l'intermédiaire d'au moins un joint d'étanchéité.

4. Servovalve selon l'une quelconque des revendications précédentes, **caractérisée en ce que** la chemise tiroir de commande (16) présente au niveau de ses deux extrémités (28) des rainures ou des renfoncements (22), sur lesquels respectivement un joint d'étanchéité, de préférence un joint torique (26), peut être attaché ou est attaché.

5. Servovalve selon l'une quelconque des revendications précédentes, **caractérisée en ce que** le bloc de valve (14) de l'étage de puissance de la servovalve (10) présente des interfaces de connexion (C1, R, C2, P), qui sont formées au niveau de son côté inférieur, dans laquelle les canaux d'écoulement (20, 20', 20") de la chemise tiroir de commande (16) sont en contact avec les interfaces de connexion (C1, R, C2, P).

6. Servovalve selon l'une quelconque des revendications précédentes, **caractérisée en ce que** le bloc de soupape (14) entourant la chemise tiroir de commande (16) consiste en acier, en titane ou en aluminium.

7. Servovalve selon l'une quelconque des revendications précédentes, **caractérisée en ce que** la chemise tiroir de commande (16) consiste en acier, en titane ou en aluminium.

8. Actionneur, en particulier servant à piloter un ou plusieurs clapets d'un aéronef, **caractérisé en ce que** l'actionneur est équipé d'une servovalve selon l'une quelconque des revendications 1 à 7 et est relié à celle-ci de telle manière que l'actionneur est commandé de manière hydraulique par la servovalve.

9. Actionneur selon la revendication 8, **caractérisé en ce que** l'actionneur présente un boîtier et/ou un bloc de valve, et que le deuxième étage de la servovalve est intégré dans ledit boîtier et/ou dans ledit bloc de valve de l'actionneur.

10. Aéronef avec au moins une servovalve selon l'une quelconque des revendications 1 à 7 et/ou avec au moins un actionneur selon la revendication 8 ou 9.
